(19) Europäisches Patentamt European Patent Office Office européen des brevets

(11) **EP 2 003 547 A1**

(12) **DEMANDE DE BREVET EUROPEEN**

(43) Date de publication:
**17.12.2008 Bulletin 2008/51**

(51) Int Cl.:
**G06F 7/72** (2006.01)

(21) Numéro de dépôt: **08157654.8**

(22) Date de dépôt: **05.06.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **07.06.2007 FR 0704087**

(71) Demandeur: **THALES**
**92200 Neuilly sur Seine (FR)**

(72) Inventeurs:
• **Sauzet, Alain**
**91070, BONDOUFLE (FR)**

• **Bernard, Florent**
**77185, LOGNES (FR)**
• **Garrido, Eric**
**95230, SOISY /MONTMORENCY (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(54) **Operateur de reduction modulaire amélioré**

(57) La présente invention concerne un dispositif de réduction modulaire amélioré. Le dispositif de réduction modulaire comporte un multiplieur (12) mettant en oeuvre une variante du procédé de multiplication de Montgomery utilisant une base de numération r élevée, r supérieure ou égale à 4. Elle s'applique notamment aux composants de calcul utilisés en cryptographie asymétrique.

FIG.1

EP 2 003 547 A1

**Description**

La présente invention concerne un dispositif de réduction modulaire amélioré. Elle s'applique notamment aux composants de calcul utilisés en cryptographie asymétrique.

Généralement, les procédés de cryptage à clé publique s'appuient sur des calculs opérés dans un anneau modulaire de nombres algébriques. Les opérations cryptographiques étant donc effectuées en arithmétique modulaire, l'opération de réduction modulaire est très fréquemment requise. En effet, dans un anneau $Z_n$, cette opération permet de transformer un premier nombre supérieur à n en un nombre inférieur à n et congru au premier. Un enjeu important lié aux performances des composants de calculs cryptographiques concerne cette opération.

Une méthode naturelle pour effectuer une réduction modulaire est de calculer une division euclidienne, le résultat étant égal au reste de cette division. Cependant, les performances d'une telle opération sont très médiocres et le calcul de division nécessite généralement l'utilisation d'un microprocesseur. Actuellement, certains procédés de réduction modulaire permettent d'obtenir de faibles temps de calcul, mais ils sont généralement limités par la taille des nombres à traiter. D'autres procédés sont flexibles, c'est à dire qu'ils permettent, au contraire, de traiter des nombres de tailles quelconques, mais ils nécessitent souvent un temps de calcul très important. Un brevet publié sous le numéro EP0712071 propose également un procédé de réduction modulaire selon la méthode de Montgomery. Cependant, ce procédé implique le calcul d'un paramètre H, calcul inutile pour certaines applications. De plus, aucune solution de l'art antérieur n'est aisément intégrable au sein d'un composant cryptographique comportant d'autres modules de calculs.

Un but de l'invention est de réaliser un dispositif de mise en oeuvre d'un procédé de réduction modulaire permettant de traiter, dans un temps de calcul réduit, des nombres de taille non déterminée à l'avance, ledit dispositif pouvant être intégré, par exemple, aisément dans un composant de calcul cryptographique. A cet effet, l'invention a pour objet un dispositif de réduction modulaire, caractérisé en ce qu'il comporte un multiplieur mettant en oeuvre une opération de multiplication de Montgomery utilisant une base de numération r élevée, supérieure ou égale à 4.

Le multiplieur peut mettre en oeuvre l'algorithme suivant :

$$S \leftarrow p_0.q$$
$$\text{pour i allant de 0 à } t_n\text{-1, faire :}$$

$$m_i \leftarrow S_0.n' \bmod r$$
$$S \leftarrow p_i.q + (m_i n + S)/r$$

$$m_{tn} \leftarrow S_0.n' \bmod r$$
$$S \leftarrow (m_{tn}.n + S)/r$$

où $t_n$ désigne la taille du module n en nombre de mots-machine, p et q les opérandes à multiplier, $m_i$ des coefficients intermédiaires, S le résultat de la multiplication, et la valeur n' étant égale à $-n^{-1} \bmod r$.

Selon un mode de réalisation, le multiplieur comporte un multiplieur-additionneur comporte p couples logique-registre pipeline, recevant plusieurs chiffres à additionner et à multiplier, au moins deux sorties correspondant au poids faible et au poids fort, un additionneur recevant les deux sorties du multiplieur-additionneur, le nombre p étant choisi de façon telle que la fréquence maximale F1max du multiplieur-additionneur soit supérieure ou égale à la fréquence maximale F2max de l'additionneur.

Le dispositif de réduction modulaire peut comporter également un séquenceur, un bloc additionneur et un module mémoire, une sortie du séquenceur étant reliée à une entrée de commande du multiplieur, une sortie du séquenceur étant reliée à une entrée de commande du bloc additionneur, et le module mémoire étant relié au multiplieur et à l'additionneur pour échanger des données.

L'invention a également pour objet un composant cryptographique comportant un dispositif de réduction modulaire tel que décrit plus haut.

D'autres caractéristiques apparaîtront à la lecture de la description détaillée donnée à titre d'exemple et non limitative qui suit faite en regard de dessins annexés qui représentent :

- la figure 1, un synoptique de dispositif de réduction modulaire selon l'invention,
- la figure 2, un exemple de cellule de multiplication-addition utilisée par le dispositif de réduction modulaire selon l'invention,
- la figure 3, un exemple de multiplieur modulaire de Montgomery utilisé par le dispositif de réduction modulaire selon l'invention.

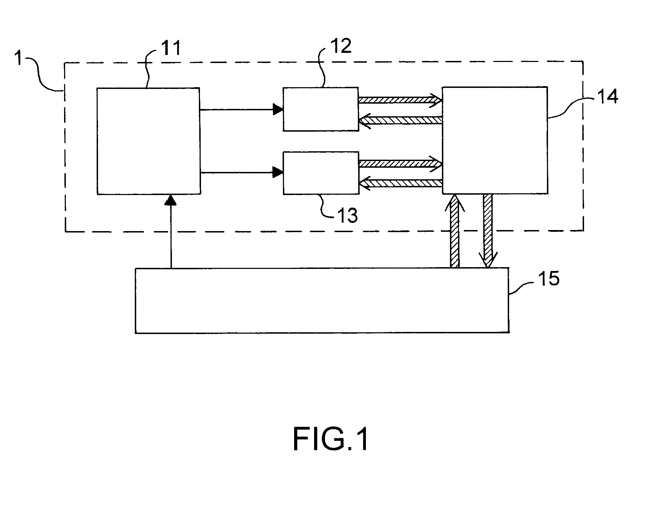

La figure 1 présente un synoptique de dispositif de réduction modulaire selon l'invention. Le dispositif de réduction modulaire 1 comporte un séquenceur 11, un bloc multiplieur 12, un bloc additionneur 13, un module mémoire 14. Le bloc multiplieur 12 et le bloc additionneur 13 reçoivent des commandes du séquenceur 11 et échangent chacun des données avec le module mémoire 14. Une application utilisatrice 15 envoie des commandes au séquenceur 11 et échange des données avec le module mémoire 14.

Les données manipulées sont enregistrées sur des mots-machine chacun composés de b bits. La dimension b des mots-machines est généralement une puissance de 2. La base de numération r est définie comme étant égale à $2^b$. Le module n est un nombre impair enregistré sur $t_n$ mots machine. On définit R comme une puissance de la base de numération r, R étant supérieur au module n. Un nombre x peut se décomposer dans la base r en t+1 chiffres $x_i$ comme suit :

$$x = x_0 + x_1.r + x_2.r^2 + \ldots + x_t.r^t,$$

où chaque chiffre $x_i$ est de la taille d'un mot-machine.

Enfin, un ensemble de nombres $g_i$ est défini comme suit : $g_i = R^{2+i} \bmod n$, i variant de 0 à k-1, k étant une valeur maximale, déterminée par exemple par l'application utilisatrice 15 de l'invention. Les valeurs $g_i$ sont précalculées, par exemple par l'application utilisatrice 15 de l'invention, par une autre méthode de réduction modulaire. En effet, les valeurs $g_i$ ne peuvent pas être précalculées par le dispositif de réduction modulaire 1 puisque ces mêmes valeurs $g_i$ sont nécessaires au fonctionnement du dispositif. Une fois ces valeurs $g_i$ calculées, le dispositif de réduction modulaire 1 est alors en mesure de calculer x mod n pour des valeurs de x au plus égales à $R^{k+1}-1$.

Le dispositif de réduction modulaire 1 selon l'invention met en oeuvre le procédé suivant pour réduire le nombre x :

Poser s=0, u=0
Pour i variant de 0 à k-1, faire les opérations suivantes :

$u \leftarrow MMul(x_i, g_i)$
$s \leftarrow MAdd(s, u)$

retourner MMul(s, 1).

où u et s sont des variables temporaires, MMul() un algorithme de multiplication modulaire mis en oeuvre dans le bloc multiplieur 12 et explicité ci-après, et MAdd() un algorithme d'addition modulaire mis en oeuvre dans le bloc additionneur 13.

Le module mémoire 14 mémorise les nombres n, gi, les chiffres $x_i$ de x et les valeurs u et s. Le séquenceur 11 commande le bloc multiplieur 12 et le bloc additionneur 13 pour exécuter l'algorithme de réduction modulaire, en utilisant les données enregistrées dans le module mémoire 14.

Le bloc multiplieur 12 met en oeuvre une variante de l'algorithme de Montgomery opérant sur une base de numération r élevée (r>=4). Il travaille avec une valeur de $R=r^{tn+1}$. Les chiffres de x, utilisés par le séquenceur 11, ont donc une taille de $t_n+1$ mots.

Une autre valeur notée n' et égale à $-n^{-1} \bmod r$, doit être précalculée, par exemple par l'application utilisatrice 15 de l'invention. Le bloc multiplieur 12 dispose, par exemple, d'un premier registre mémorisant la valeur $t_n$ et d'un second registre mémorisant la valeur n'. Ces deux registres sont chargés à l'initialisation du bloc.

Le bloc multiplieur 12 est interfacé avec le module mémoire 14, duquel il prend ses paramètres et place le résultat du calcul. Il prend en entrée deux nombres de taille $t_n+1$ mots et le résultat est un nombre de $t_n+1$ mots. Le module n ayant une taille de $t_n$ mots, on peut écrire que les entrées p et q sous la forme p=p'+ep.n et q=q'+eq.n, ou p' et q' sont inférieur à n, et ep et eq ont une taille binaire ≤2b bits. Le bloc multiplieur 12 calcule une valeur c telle que $c=c'+e_c.n$, avec $e_c$ ayant une taille binaire ≤2b bits, et c' congru à $a.b.R^{-1} \bmod n$. Par la suite, les chiffres d'un nombre N dans la base r sont notés $N_i$.

Afin d'effectuer l'opération de multiplication modulaire de Montgomery de deux nombres p et q, le bloc multiplieur 12 met en oeuvre le procédé suivant :

i. $S \leftarrow p_0.q$
ii. pour i allant de 0 à $t_n-1$, faire :

a. $m_i \leftarrow S_0.n' \bmod r$
b. $S \leftarrow p_i.q + (m_i n + S)/r$

iii. $m_{tn} \leftarrow S_0.n'$ mod r
iv. $S \leftarrow (m_{tn}.n+S)/r$

où les valeurs $m_i$ sont des coefficients intermédiaires de calcul, S est le résultat.

Les opérations ii.b et iv peuvent être réalisées par un multiplieur-additionneur « mot-machine x nombre + nombre ». L'opération i est réalisée par un multiplieur « mot-machine x nombre ». Les opérations de division par r sont réalisées en matériel en décalant le résultat d'un mot-machine vers le chiffre de poids le plus faible.
Le bloc multiplieur 12 comporte trois entrées parallèles de b bits : $P_i$, $Q_i$ et $N_i$, recevant à chaque étape du procédé les chiffres de p, q et n respectivement. L'envoi des opérandes d'entrées au bloc multiplieur 12 est donc réalisée en série/parallèle. Le bloc multiplieur 12 comporte également une sortie parallèle de b bits, produisant un mot-machine à chaque étape. La sortie du résultat est donc réalisée en série/parallèle.
Le dispositif de réduction modulaire 1 est commandé par un microprocesseur ou un autre bloc matériel pour effectuer les étapes suivantes :

 i. écrire dans le bloc mémoire 14 des valeurs n, $g_i$, $x_i$
 ii. ordonner au séquenceur 11 d'exécuter l'algorithme de réduction
 iii. lire le résultat dans le bloc mémoire 14

Les valeurs n et $g_i$ étant indépendantes de la valeur x a réduire modulo n, il n'est pas nécessaire de réécrire ces valeurs en mémoire avant chaque nouvelle réduction modulaire.
Les valeurs $t_n$ et n' sont utilisées par le bloc multiplieur 12. Le bloc additionneur 13 n'utilise que la valeur $t_n$.
A titre d'exemple, lors de la première étape (i.), les valeurs enregistrées en mémoire 14 peuvent être placées aux adresses suivantes :

 n occupe les mots-machine d'adresses 0 à $t_n$,
 $g_0$ occupe les mots-machine d'adresses $t_n+1$ à $2 t_n$,
 $g_1$ occupe les mots-machine d'adresses $2 t_n+1$ à $3 t_n$,
 ...
 $g_{k-1}$ occupe les mots-machine d'adresses $k.t_n+1$ à $(k+1).t_n$
 x occupe les mots-machine d'adresses $(k+1).t_n+1$ à $2 k.t_n$.
 u occupe les mots-machine d'adresses $(2k)t_n+1$ à $(2k+1)t_n$
 s occupe les mots-machine d'adresses $(2k+1)t_n+1$ à $(2k+2)t_n$

Les variables temporaires u et s sont initialisées à zéro et un emplacement est réservé pour enregistrer le résultat aux adresses $(2k+2)t_n+1$ à $(2k+3)t_n$.
Trois paramètres sont passés au bloc multiplieur 12 lors de chaque appel. Le premier paramètre et l'adresse en mémoire 14 de la première opérande, le deuxième paramètre est l'adresse en mémoire 14 de la seconde opérande, et le troisième paramètre est l'adresse en mémoire 14 de l'emplacement prévu pour enregistrer le résultat de la multiplication.
Deux paramètres sont passés au bloc additionneur 13, les deux paramètres correspondant aux adresses en mémoire 14 des deux opérandes. Le résultat de l'addition est placé à l'adresse de la deuxième opérande.
Le séquenceur 11 peut alors dérouler le procédé de réduction modulaire avec les données en mémoire de la façon suivante :

 MMul($(k+1)t_n+1$, $t_n+1$, $(2k)t_n+1$) (adresses de $x_0$, $g_0$ et u)
 MAdd($(2k)t_n+1$, $(2k+1)t_n+1$) (adresses de u et s)
 ...
 MMul($(2k-1)t_n+1$, $t_n+1$, $(2k)t_n+1$) (adresses de $x_k$, $g_0$ et u)
 MAdd ($(2k)t_n+1$, $(2k+1)t_n+1$) (adresses de u et s)
 MMul($(2k+1)t_n+1$, adresse(1), $(2k+3)t_n+1$)) (le deuxième paramètre est forcé à la valeur 1).

Les paramètres d'entrée du bloc multiplieur 12 étant des adresses en mémoire, le calcul MMul(s,1) peut être réalisé, soit en plaçant la valeur 1 à une adresse particulière en mémoire 14, soit par un séquencement particulier du bloc où le second paramètre est forcé à la valeur 1.
Le procédé de Montgomery mis en oeuvre par le bloc multiplieur 12 produit un résultat compris entre 0 et 2n-1, congru au résultat classique modulo n. L'opération MMul(s, 1) permet de retrouver le résultat classique.
Le bloc multiplieur 12 manipulant des données modulo 2n, le bloc additionneur 13 doit donc effectuer des additions modulo 2n. Il réalise ces additions en utilisant un additionneur multiprécision, un soustracteur multiprécision, et un comparateur multiprécision. Ainsi, l'opération d'addition modulaire a+b mod 2n de deux nombres a et b est réalisée comme suit :

> calculer t=a+b
> si t>=2n, calculer t=t-2n
> retourner t

t étant une variable contenant le résultat de l'addition.

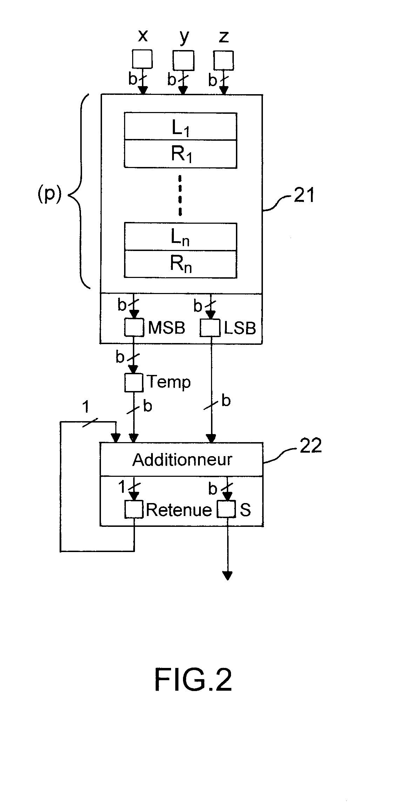

La figure 2 est un exemple de cellule de multiplication-addition utilisée par le bloc multiplieur 12 pour effectuer l'opération $S \leftarrow p_i.q+(m_i n+S)/r$ du procédé présenté plus haut. La cellule est pipelinée pour améliorer ses performances. Le pipeline consiste à rajouter des barrières de registres entre les phases logiques afin de réduire le chemin critique, et ainsi d'augmenter la fréquence maximale de fonctionnement (théoriquement celle d'un additionneur en base r).

On définit la profondeur de pipeline d'un composant élémentaire par son nombre de registres internes. On ne compte pas le registre de sortie.

L'exemple donné à la figure 2 suppose que l'on dispose d'un multiplieur-additionneur 1 pipeliné, de profondeur p.

Il comporte notamment un ensemble de couples logique-registre (li, ri). Le nombre p de ces couples est notamment choisi pour que la fréquence maximale F1max du multiplieur-additionneur pipeliné soit supérieure ou égale à la fréquence maximale F2max de l'additionneur, les valeurs de ces deux fréquences étant les plus proches possibles.

La fréquence maximale de fonctionnement du multiplieur-additionneur est donnée par l'inverse du temps d'exécution de l'opération de multiplication-addition, alors que la fréquence maximale de fonctionnement du multiplieur-additionneur pipeliné est donné par l'inverse du temps d'exécution d'un seul des p étages. Pour un fonctionnement optimal, on détermine la fréquence maximale de l'additionneur, ce qui donne le temps d'exécution de l'additionneur et on découpe le multiplieur-additionneur en p étages de temps de traversée inférieur ou égal, mais le plus proche possible, au temps d'exécution de l'additionneur.

Les entrées du multiplieur-additionneur 21 correspondent à trois chiffres : $p_i$, $q_j$ et $v_j$ et la sortie est un couple de chiffres correspondant à $LSB(p_i q_j + v_j)$ et $MSB(p_i q_j + v_j)$. La sortie tient sur deux chiffres.

Les résultats du multiplieur-additionneur sont transmis à un additionneur trois entrées, référencé 22 : chiffre+chiffre+carry $\rightarrow$ chiffre+carry, fonctionnant en 1 cycle (pipeline 0) à la fréquence F2max.

Le registre Temp correspond au stockage de c nécessaire au calcul suivant : addition de c avec le LSB suivant et la retenue précédente.

Les données (chiffres de $p \times Q + V$) sortent donc en série à chaque cycle, chiffre de poids faible en tête, dans le même sens que la propagation de la retenue.

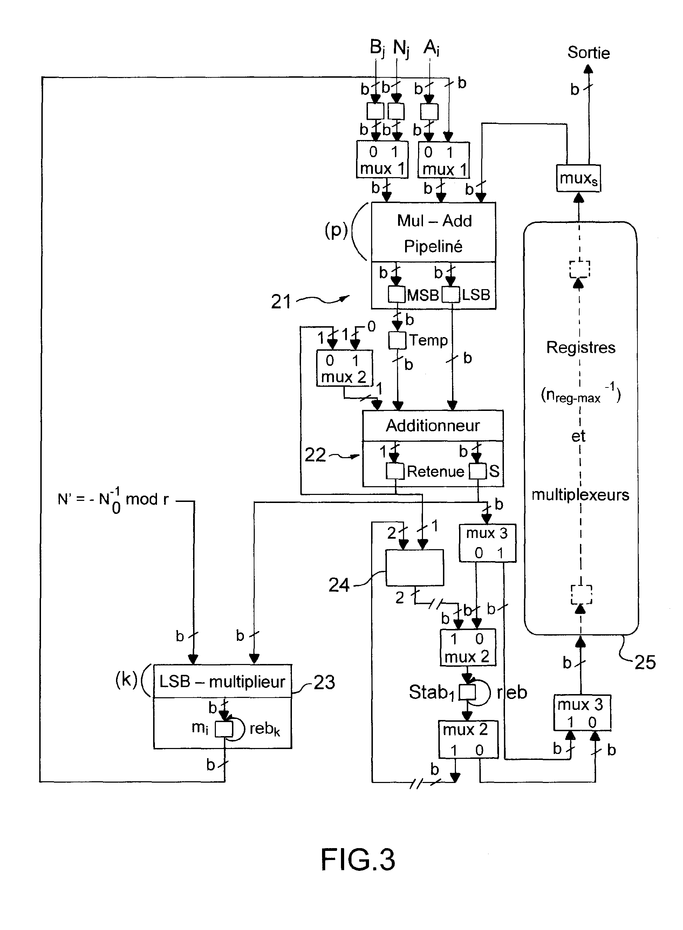

La figure 3 décrit un exemple de bloc multiplieur 12, avec un dispositif 3 adapté à la partie basse de la multiplication, et un dispositif 5 composé de registres et de multiplexeurs.

Dans cet exemple, les principaux composants du circuit sont : un multiplieur-additionneur 21 pipeliné, un additionneur 3 entrées, référencé 22, un multiplieur partie basse 23 et un additionneur 2 bits + 1 bit vers 2 bits, désigné 24, une barrière de $n_{reg-max}$-1 registres et de multiplexeurs, désignée 25.

Le nombre de multiplexeurs et de registres dépend notamment des données intrinsèques au circuit, les profondeurs de pipeline p et k, ainsi que du nombre de chiffres des données.

Dans l'exemple de la figure 3, la barrière de $n_{reg-max}$-1 registres et de multiplexeurs (composant référencé 25) a notamment pour fonction de retarder l'arrivée des données dans le multiplieur-additionneur 1.

## Multiplication partie basse - composant 3

Dans la boucle principale de l'algorithme, à chaque itération, on détermine $m_i$, le chiffre qui rend la quantité $S+m_i N$ divisible par r.

$m_i$ est déterminé en effectuant une multiplication partielle du chiffre de poids faible de S avec une constante N', précalculée une fois pour toute pour un module N donné. Dans cette multiplication, seule la partie basse nous intéresse : on effectue cette opération modulo r.

Cette opération étant plus lente qu'une addition, elle est également pipeliné. On appelle k la profondeur de pipeline de cet opérateur et on suppose k<p.

## Rebouclage, latence et registres supplémentaires

Deux cas sont distingués, le passage de la multiplication classique $a_i B+T \rightarrow S$, (1), à la multiplication et décalage $(m_i \times N+S)/r \rightarrow T$ , (2), et le passage de (2) à (1), le retard n'étant pas le même.

Ce retard détermine notamment le nombre de registres à utiliser : $n'_{reg}$ ou $n_{regk}$ selon les cas. Ainsi par exemple, dans le passage de (2) à (1), et dans le cas où $p+2 \leq n$ (cas où $n'_{reg}$ est défini), le nombre de registres à utiliser est $n'_{reg}$.

Comme il y en a $n_{reg-max}$ -1, il faut en sauter $n_{reg-max}$ -1- $n'_{reg}$. Ceci est fait grâce aux multiplexeurs, placés en conséquence.

***Passage de (1) à (2)***

Pour pouvoir chaîner sans perte de temps (ie : sans rajouter de latence) les multiplications-additions (1) et (2), il convient de déterminer $m_i$ avant d'avoir parcouru la totalité des chiffres de la multiplication en cours.
Il est donc souhaitable de réaliser la condition : $p+k+2 \leq n$.
En effet, le chiffre de poids faible du résultat de la multiplication-addition est disponible lorsque le chiffre d'indice $p+1$ se présente à l'entrée du multiplieur-additionneur.
Au cycle suivant, l'addition est réalisée. $S_0$ est disponible, le calcul de $m_i$ peut donc débuter.
Après $k+1$ coups d'horloge supplémentaires, $m_i$ est disponible en sortie du multiplieur partie basse. Il peut donc être utilisé comme entrée du multiplieur-additionneur au coup d'horloge suivant. Ceci explique la condition $p+k+2 \leq n$.

***Rebouclage***

Si on veut chaîner les multiplications-additions (1) et (2), sans perte de temps, on choisit $p+k+2 \leq n$.
Dans ce cas, la donnée $m_i$ est disponible avant la fin de parcours des chiffres de la multiplication-addition en cours. On reboucle donc cette valeur, afin de retarder son entrée dans le multiplieur-additionneur. On définit alors $n_{rebk}=n-p-k-2$ qui correspond au nombre de rebouclage nécessaire de cette valeur.
Dans le cas particulier où $n_{rebk}=0$, la donnée $m_i$ est synchrone avec les nouvelles entrées du multiplieur-additionneur.
Cependant, dans tous les cas on reboucle la valeur $m_i$ $n$ fois afin que l'entrée soit la même pour tous les chiffres de N.
Si en revanche $n-p-k-2$ est négatif, ceci correspond à un retard du calcul de $m_i$, on rajoute donc de la latence.

***Latence***

Lorsque la condition $p+k+2 \leq n$ n'est pas réalisée, ceci signifie que les sorties ont du retard sur les entrées, des coups d'attente (latence) pour synchroniser les données sont rajoutés.
Pendant les coups de latence, les entrées sont bloquées (au sens où on prend comme nouvelle entrée 0 (pour tenir compte de la dernière retenue de S)), le calcul se poursuivant pour les données déjà entrées.
Dans ce cas ($p+k+2>n$), on définit $n_{latk}=p+k+2-n$. Cette grandeur représente le nombre de coups de latence à effectuer avant de présenter de nouvelles entrées au multiplieur-additionneur.
Dès que $m_i$ est déterminé, il est utilisé comme entrée de la multiplication-addition. $S_0$ quant à lui est forcément déterminé avant $m_i$ et doit être stocké (ainsi que $S_1$, $S_2$...) jusqu'à ce que $m_i$ soit calculé.
Pour cette raison, on rajoute des registres afin de retarder l'arrivée des résultats à l'entrée du multiplieur-additionneur.

**Registres supplémentaires**

Deux cas sont distingués. En effet, selon que $p+k+2$ est plus grand ou plus petit que $n$, le nombre et l'utilisation des registres ajoutés ne sont pas les mêmes.

Cas 1 : $p+k+2 \leq n$

Dans ce cas, l'ensemble $S_0$ et $m_i$ est déterminé avant la fin de parcours des chiffres des données.
Pour $m_i$, voir la section sur le rebouclage, on utilise la méthode décrite ci-dessus dans la section de rebouclage.
Pour $S_0$, on retarde son arrivée à l'entrée du multiplieur additionneur par le rajout de registres à décalage.
On définit alors $n_{reg}$ par $n_{reg}=n-p-1$. Cette quantité correspond au nombre de registres à rajouter pour synchroniser l'arrivée du chiffre de poids faible du résultat d'une multiplication-addition avec les données de poids faible de la suivante.

Cas 2 : $p+k+2 > n$

Deux sous cas selon que $p$ est ou non plus grand que $n$, sont distingués. En fait, quelque soit la valeur de $p$, $m_i$ sera déterminé après $S_0$.
On retarde donc l'arrivée de $S_0$ à l'entrée du multiplieur par le rajout de registres. Ce nombre de registres ne dépendra donc que de $k$, la profondeur du pipeline de l'opérateur multiplication partie basse.

On définit donc dans ce cas, $n_{regk}$=k+1 le nombre de registres à rajouter pour retarder l'arrivée de $S_0$ à l'entrée du multiplieur.

### *Passage de (2) à (1)*

On s'intéresse ici au passage de (2) à (1). Si il n'y a pas de $m_i$ à déterminer, il faut en revanche tenir compte du décalage (division par r).

Comme précédemment, on synchronise l'arrivée des résultats avec l'entrée de nouvelles données. Ici, seule la quantité p est importante, $m_i$ n'ayant pas besoin d'être déterminé, k n'intervient pas.

En revanche, on prend en compte le décalage (ie : considérer $t_0$ comme chiffre de poids faible et non pas $t_{-1}$ qui est nul). Ceci peut être vu comme un niveau de pipeline supplémentaire.

### *Registres supplémentaires et latence*

On distingue donc comme précédemment, deux cas, selon que p+2 est plus grand que n ou pas.

#### Cas 1 : p+2 ≤ n

Dans ce cas, $t_0$ est disponible avant la fin de parcours des chiffres des données. On rajoute donc des registres pour prendre en compte le retard. On définit alors, $n'_{reg}$=n-p-2 qui indique le nombre de registre à rajouter pour prendre en compte le retard.

#### Cas 2 : p+2> n

Dans ce cas, $t_0$ est disponible après le parcours des chiffres des données. On retarde donc l'entrée des nouvelles données. Ceci se fait comme précédemment en rajoutant des coups d'attente (latence). On définit $n'_{lat}$=p+2-n qui représente le nombre de coups d'attente à réaliser.

### *Additionneur supplémentaire et rebouclage*

La détermination de $t_n$ se fait par une addition de $s_{n+1}$ avec c, $s_{n+1} \leq 2$ et $c \leq 1$. Pour cela on prévoit un additionneur (de la logique) 2 bits + 1 bits vers 2 bits ($t_n \leq 3$) (composant désigné 24).

Dans le calcul de T, le décalage permet d'économiser l'utilisation d'un registre. Celui-ci est utilisé pour le stockage de $S_{n+1}$. Cette valeur est stockée jusqu'à ce que c soit déterminé, puis l'addition des deux est réalisée libérant ainsi le registre de stockage de $S_{n+1}$.

On définit donc $n_{reb}$=n+$n_{latk}$-1 qui est le nombre de rebouclage nécessaire de $S_{n+1}$.

### *Paramètres de correction*

Le dessin final du composant dépend notamment des profondeurs de pipeline p et k ainsi que du nombre de chiffres n des entiers longs pour lequel il est initialement prévu. En particulier, le nombre de registres à rajouter est un point délicat puisqu'il n'est pas le même suivant que l'on se trouve dans le cas du passage de (1) à (2) ou dans le passage de (2) à (1).

Le tableau 1 de synthèse qui suit lie les quantités p, k et n aux paramètres de correction précédemment définies.

Tableau 1

| | p+k+2 ≤ n ($\Rightarrow$ p+2 ≤ n) | p+k+2 > n | |
|---|---|---|---|
| | | p+2 ≤ n | p+2 > n |
| $n'_{reg}$ | n-p-2 | n-p-2 | 0 |
| $n'_{lat}$ | 0 | 0 | p+2-n |
| $n_{req}$ | n-p-1 | k+1 | |
| $n_{latk}$ | 0 | p+k+2-n | |
| $n_{rebk}$ | n-p-k-2 | 0 | |
| $n_{reb}$ | n+$n_{latk}$-1 =n-1 | n+$n_{latk}$-1=p+k+1 | |

En pratique le nombre de registres à rajouter est défini par $n_{reg-max}=max(n_{regk},n_{reg})$ et est égal à n-p-1 si p+k+2 $\leq$ n et k+1 sinon. En particulier, $n_{reg-max} \geq 1$.
Les étapes nécessitant moins de registres sont effectuées en raccourcissant la chaîne des registres par le rajout de multiplexeurs.

**Séquencement décrit à la figure 3**

Un exemple de séquencement des opérations est décrit en relation avec la figure 3. On adopte comme convention de fixer les états des multiplexeurs à la fin du coup d'horloge en cours pour commander le coup d'horloge suivant.

***Comportement général des multiplexeurs***

La latence intervient ici. En effet, selon qu'il y a de la latence ou non, les changements d'état ne se font pas aux même moments.

Il est cependant possible d'utiliser les paramètres de correction de latence du circuit ($n'_{lat}$ et $n_{latk}$) pour définir un comportement général des multiplexeurs.

En effet, on peut supposer que $|B|=n+1+ n'_{lat}$ avec les $n'_{lat}$ premiers chiffres de B nuls. (Sauf évidemment pour le calcul de $a_0B$).

De même, on peut supposer que $|N|=n+1+ n_{latk}$ avec les $n_{latk}$ premiers chiffres de N nuls.

De plus, on isole le cas particulier du premier calcul $a_0B$ pour lequel on ne prend pas en compte la latence (les $n'_{lat}$ premiers chiffres nuls de B).

Enfin, passé ce cas particulier, on remarque que les données présentées successivement en entrée du multiplieur-additionneur peuvent être regroupées par tranches de $2n+2+ n'_{lat} + n_{latk}$ données. Les $n_{latk} +n+1$ premières correspondent aux données $m_i$ et $N_j$. Les $n'_{lat} +n+1$ dernières correspondent aux données $a_i$ et $b_j$.
On aura donc un comportement cyclique des multiplexeurs, de période $2n+2+n'_{lat}+n_{latk}$

**mux 1**

mux1 est un multiplexeur à deux états symbolisant quel type d'entrées doit être pris en compte au niveau du multiplieur-additionneur. Les deux états sont :

- 0 : $x=a_i$ et $y=b_j$ sont pris comme entrées du multiplieur-additionneur.
- 1 : $x=m_i$ et $y=N_j$ sont pris comme entrées du multiplieur-additionneur.

L'utilisation des constantes $n'_{lat}$ et $n_{latk}$ permet notamment de vérifier que le changement d'état intervient lorsque tous les chiffres de B (ou de N) ont été parcourus.

Pour $a_0$ on ne prend pas en compte les $n'_{lat}$ premiers chiffres nuls. Le calcul commence directement par les données $a_0b_{n'lat}$.

Ainsi mux1, initialement à 0 (reset), reste dans cet état pendant les n premiers coups d'horloge, et passe dans l'état 1 au n+1$^{ème}$ coup.

A la fin de ce n+1$^{ème}$ coup, les données présentées en entrée du multiplieur-additionneur sont $a_0$ et $b_n$, tous les chiffres de B auront donc été parcourus.

mux1 est à 1 à la fin de ce même coup d'horloge, donc à la fin du coup d'horloge suivant, $m_1$ et $N_0$ seront présentés en entrée du multiplieur-additionneur.

Le comportement général de mux1 en fonction du coup d'horloge clock peut être résumé par les étapes suivantes :

Si clock<n+1, alors mux1=0
Sinon :

$$Si\ (clock-(n+1)\ mod\ (2n+2+ n_{latk} + n'_{lat}\ ))<n+1+ n_{latk},$$

alors mux1=1
Sinon mux1=0

*mux2*

mux2 est un multiplexeur à deux états symbolisant à quel moment doit être fait l'addition $S_{n+2}+C$. On rappelle que $S_{n+2}$ est stocké dans $Stab_1$.

De plus, lorsque cette addition est réalisée, la retenue de l'additionneur trois entrées doit être initialisée à 0 puisque une nouvelle addition commence.
Les deux états sont :

- 0 : L'addition $S_{n+1}+C$ ne peut être effectuée, c n'est pas encore déterminé.
- 1 : Les entrées $S_{n+1}$ et c sont positionnées pour être ajoutées au coup d'horloge suivant, la retenue de l'additionneur trois entrées est initialisée à 0.

Cette addition est réalisée une seule fois par itération principale (boucle sur i), elle se situe dans la deuxième boucle sur les chiffres de N.
Ceci signifie que mux2 n'est jamais deux fois de suite dans l'état 1.
De plus, cette addition porte sur les valeurs du registre Stab1, donc la profondeur de pipeline p intervient pour déterminer le comportement de mux2.

Le chiffre de poids faible ($s_0$) du produit $a_0 \times b_0$ est dans le registre de sortie de l'additionneur à clock p+3 (=1 (load)+(p+1)($s_0$ dans LSB)+1 ($s_0$ dans registre de sortie de l'additionneur)).
$s_n$ est donc dans ce même registre à clock p+3+n. Comme $s_n$ correspond au chiffre de poids faible de $a_0 \times b_n$, les entrées suivantes sont donc les chiffres de N et $m_1$.
Or l'addition doit être réalisée lorsque $t_{n-1}$ se trouve dans le registre de sortie de l'additionneur puisqu'à ce moment on dispose de la bonne valeur de carry à ajouter à $S_{n+1}$ pour déterminer $t_n$.
mux2 doit donc être dans l'état 1 lorsque $t_{n-1}$ se trouve dans le registre de sortie de l'additionneur, c'est à dire au coup d'horloge $p+3+n+n_{latk}+n+1=p+2n+n_{latk}+4$. (Il ne faut pas oublier qu'avec le décalage, $t_{n-1}$ correspond au calcul de $m_1 \times N_n$ ).
Par périodicité, on peut décrire le comportement général de mux2.

$$\text{Si clock} = p+2n+4+n_{latk} \bmod 2n+2+ n_{latk} + n'_{lat} \text{ , alors mux2=1}$$

Sinon mux2=0

*mux3*

Lors de la boucle sur les chiffres de N, un décalage à droite doit être effectué sur les chiffres de la sortie pour tenir compte de la division par r. mux3 est un multiplexeur à deux états symbolisant à quel moment on effectue le décalage (modélisé par un saut de registre). Les deux états sont :

- 0 : Le décalage n'est pas effectué.
- 1 : Le décalage est effectué.

Ce décalage d'indice est réalisé en hardware par le saut d'un registre.
Le décalage intervient lorsque la donnée $s_{n+1}$ est présente dans le registre Stab1. En effet, à cet instant, le registre S de l'additionneur contient, suivant la valeur de $n_{latk}$, soit 0 (résultat d'un coup de latence), soit la valeur de $t_0$. $t_0$ ayant un temps de retard par rapport à la multiplication classique ($s_0$), il doit alors sauter un registre pour rattraper ce temps de retard. Ce décalage doit donc être effectué jusqu'à ce que tous les chiffres (latence comprise) de T, jusqu'à $t_{n-1}$ , soient déterminés. En effet, lorsque $t_{n-1}$ est déterminé (ie : dans le registre S de l'additionneur), au coup d'horloge suivant, $t_n$ est déterminé dans Stab1 par addition de c avec $s_{n+1}$, et $t_{n-1}$ se trouve dans le registre Stab2. Le décalage prend alors fin, les données $t_{n-1}$ et $t_n$ étant de nouveau dans deux registres successifs. mux3 reste donc dans l'état 1 durant $n+ n_{latk} = n_{reb} +1$ coups.
Comme nous l'avons dit précédemment, le décalage correspond au saut du registre Stab1 qui est alors utilisé pour le rebouclage de $S_{n+1}$. Le rebouclage de $S_{n+1}$ intervient donc au même moment que le décalage. Donc le changement d'état de mux3 de 0 à 1 indique également qu'il faut reboucler la valeur $S_{n+1}$ dans le registre Stab1. Ce rebouclage à lieu $n_{reb}$ fois.
Initialement, mux3 est dans l'état 0 (multiplication classique). Il passe à 1 lorsque $S_{n+1}$ est dans le registre Stab1. Or $S_n$ est dans S au coup d'horloge p+3+n (cf : comportement de mux2). Donc $S_{n+1}$ est dans ce même registre au coup p+n+4, et dans Stab1 au coup suivant : p+n+5.

Par périodicité, on déduit le comportement général de mux3 :

Si clock<p+n+5, alors mux3=0

Sinon :

$$\text{Si (clock-}(p+n+5) \text{ mod } (2n+2+ n_{latk} + n'_{lat} )) < n_{reb} +1, \text{ alors mux3=1}$$

Sinon mux3=0

La remarque précédente permet de définir et de décrire la commande reb.

### Commande reb

Cette commande représente les instants pour lesquels $S_{n+1}$ doit être rebouclé dans le registre Stab1. Les deux états sont :

- 0 : pas de rebouclage
- 1 : rebouclage

Le comportement de reb est décrit en même temps que celui de mux3. On en déduit donc :

Si clock<p+n+5, alors reb=0

Sinon :

$$\text{Si (clock-}(p+n+5) \text{ mod } (2n+2+ n_{latk} + n'_{latk} )) < n_{reb}, \text{ alors reb=1}$$

Sinon reb=0

### mux4

mux4 est un multiplexeur à deux états qui fait parti de la barrière de registres.

Dans les cas où ce multiplexeur est présent, il indique s'il faut utiliser $n'_{reg}$ ou $n_{regk}$ registres. Les deux états sont :

- 0 : Utilisation de la totalité des registres (correspond à la multiplication (2)).
- 1 : Utilisation de $n'_{reg}$ registres (correspond à la multiplication (1)). mux4 doit être dans l'état 1 lorsque $t_0$ est déterminé dans S. On a vu (cf : mux3) que $s_{n+1}$ est présent dans S à clock=p+n+4, donc $n_{latk}$ +1 coups d'horloge après, c'est à dire à clock=p+n+5+ $n_{latk}$ , $t_0$ est dans S.
  mux4 doit rester à 1 jusqu'à ce que $t_n$ se trouve dans Stab1 soit durant n+1 coups d'horloge.

Par périodicité, on déduit un comportement général de mux4 :

Si clock<p+n+5+ $n_{latk}$, alors mux4=0

Sinon :

$$\text{Si (clock-}(p+n+5+ n_{latk} ) \text{ mod } (2n+2+ n_{latk} +n'_{lat})) < n+1, \text{ alors mux4=1}$$

Sinon mux4=0

### Commande $reb_k$

La commande $reb_k$ indique à quel moment il faut reboucler la valeur de $m_i$ dans le registre de sortie du multiplieur partie basse.

Les deux états sont :

- 0 : pas de rebouclage
- 1 : rebouclage

Initialement, $reb_k = 0$.

$m_1$ est déterminé (ie : présent dans le registre de sortie du multiplieur partie basse) à la fin du coup d'horloge clock=p+k+4. En effet, $m_1$ est déterminé à l'aide de $s_0$ qui est lui même présent dans le registre S à la fin du coup d'horloge clock=p+3 (cf : mux2). Il sert donc d'entrée au multiplieur partie basse qui donne le résultat k+1 coups d'horloge après, soit à clock=p+k+4.

Il faut donc reboucler cette valeur à partir de ce moment là, au moins n+1 fois afin que cette entrée soit la même pour tous les chiffres de N. Il faut également tenir compte de la valeur de $n_{rebk}$ qui est le nombre de rebouclages nécessaires de $m_1$ dans le cas où $m_1$ est déterminé avant le parcours de tous les chiffres de B.

Le nombre de rebouclage total de $m_1$ est donc : $n+1+n_{rebk}$.

Par périodicité, on en déduit le comportement général de $reb_k$ :

Si clock<p+n+4, alors $reb_k = 0$

Sinon :

$$\text{Si } (clock-(p+n+4) \bmod (2n+2+ n_{latk} + n'_{lat} )) < n+1+n_{rebk}, \text{ alors } reb_k = 1$$

Sinon $reb_k = 0$

Selon un mode de réalisation, le dispositif de réduction modulaire 1 est couplé avec d'autres opérateurs de calcul tel que, par exemple, un opérateur d'exponentiation modulaire. Il peut ainsi partager, sein d'un même bloc matériel, les fonctions élémentaires d'addition 12 et de multiplication modulaire 12 et le bloc mémoire 14. La valeur x à réduire peut alors être le résultat d'opérations effectuées par d'autres opérateurs du bloc matériel, et le résultat de la réduction modulaire peut être utilisé comme entrée pour d'autres opérateurs.

L'architecture des blocs multiplieur et additionneur, ainsi que le procédé de réduction modulaire exécuté par le séquenceur permettent de travailler sur des nombres de taille quelconque. Sachant que les tailles des clés de cryptage utilisées par les systèmes cryptographiques augmentent régulièrement au fil des ans, le dispositif selon l'invention présente l'avantage de pouvoir traiter des nombres très grands.

Le dispositif de réduction modulaire bénéficie des très bonnes performances et de la flexibilité du multiplieur utilisé.

Un autre avantage du dispositif de réduction modulaire selon l'invention est de proposer une solution aisément intégrable dans un composant cryptographique proposant d'autres fonctions de calcul.

**Revendications**

**1.** Dispositif de réduction modulaire, **caractérisé en ce qu'**il comporte un multiplieur (12) mettant en oeuvre une opération de multiplication de Montgomery utilisant une base de numération r élevée, supérieure ou égale à 4.

**2.** Dispositif de réduction modulaire selon la revendication 1, **caractérisé en ce que** le multiplieur (12) met en oeuvre l'algorithme suivant :

    i. $S \leftarrow p_0.q$
    ii. pour i allant de 0 à $t_n-1$, faire :

        a. $m_i \leftarrow S_0.n' \bmod r$
        b. $S \leftarrow p_i.q + (m_i n+S)/r$

    iii. $m_{tn} \leftarrow S_0.n' \bmod r$
    iv. $S \leftarrow (m_{tn}.n+S)/r$

    où $t_n$ désigne la taille du module n en nombre de mots-machine, p et q les opérandes à multiplier, $m_i$ des coefficients intermédiaires, S le résultat de la multiplication, et la valeur n' étant égale à $-n^{-1} \bmod r$.

**3.** Dispositif de réduction modulaire selon l'une des revendications précédentes, **caractérisé en ce qu'**il comporte un multiplieur-additionneur comportant p couples logique-registre pipeliné, recevant plusieurs chiffres à additionner et à multiplier, au moins deux sorties correspondant au poids faible et au poids fort, un additionneur recevant les deux sorties du multiplieur-additionneur, le nombre p étant choisi de façon telle que la fréquence maximale F1max du multiplieur-additionneur soit supérieure ou égale à la fréquence maximale F2max de l'additionneur.

4. Dispositif de réduction modulaire selon l'une des revendications précédentes, **caractérisé en ce qu'**il comporte également un séquenceur (11), un bloc additionneur (13) et un module mémoire (14), une sortie du séquenceur étant reliée à une entrée de commande du multiplieur, une sortie du séquenceur étant reliée à une entrée de commande du bloc additionneur, et le module mémoire étant relié au multiplieur et à l'additionneur pour échanger des données.

5. Composant cryptographique comportant un dispositif de réduction modulaire selon l'une des revendications précédentes.

FIG.1

FIG.2

FIG.3

Europäisches
Patentamt

European
Patent Office

Office européen
des brevets

## RAPPORT DE RECHERCHE EUROPEENNE

Numéro de la demande

EP 08 15 7654

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/103288 A (THALES [FR]; BERNARD FLORENT [FR]; SAUZET ALAIN [FR]; GARRIDO ERIC [FR) 5 octobre 2006 (2006-10-05) <br> * abrégé * <br> * page 1, ligne 4 - ligne 5 * <br> * page 3, ligne 25 - page 6, ligne 5 * <br> * page 7, ligne 28 - ligne 29 * <br> * revendication 1 * <br> * figures 1,2 * <br> ----- | 1-3,5 | INV. <br> G06F7/72 |

DOMAINES TECHNIQUES
RECHERCHES (IPC)

G06F

~~Le présent rapport a été établi pour toutes les revendications~~

| Lieu de la recherche | Date d'achèvement de la recherche | Examinateur |
|---|---|---|
| La Haye | 4 juillet 2008 | Post, Katharina |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**EP 2 003 547 A1**

Europäisches
Patentamt

European
Patent Office

Office européen
des brevets

**RAPPORT DE RECHERCHE EUROPEENNE**

Numéro de la demande

EP 08 15 7654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/103288 A (THALES [FR]; BERNARD FLORENT [FR]; SAUZET ALAIN [FR]; GARRIDO ERIC [FR] 5 octobre 2006 (2006-10-05) * abrégé * * page 1, ligne 4 - ligne 5 * * page 3, ligne 25 - page 6, ligne 5 * * page 7, ligne 28 - ligne 29 * * revendication 1 * * figures 1,2 * ----- | 1-3,5 | INV. G06F7/72 |

DOMAINES TECHNIQUES
RECHERCHES (IPC)

G06F

Le présent rapport a été établi pour toutes les revendications

| Lieu de la recherche | Date d'achèvement de la recherche | Examinateur |
|---|---|---|
| La Haye | 4 juillet 2008 | Post, Katharina |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................................
& : membre de la même famille, document correspondant

EPO FORM 1503 03.82 (P04C02)

17

Europäisches
Patentamt

European
Patent Office

Office européen
des brevets

**RAPPORT DE RECHERCHE EUROPEENNE**

Numéro de la demande

EP 08 15 7654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/103288 A (THALES [FR]; BERNARD FLORENT [FR]; SAUZET ALAIN [FR]; GARRIDO ERIC [FR) 5 octobre 2006 (2006-10-05)<br>* abrégé *<br>* page 1, ligne 4 - ligne 5 *<br>* page 3, ligne 25 - page 6, ligne 5 *<br>* page 7, ligne 28 - ligne 29 *<br>* revendication 1 *<br>* figures 1,2 *<br><br>----- | 1-3,5 | INV.<br>G06F7/72 |

|  |  |
|---|---|
|  | DOMAINES TECHNIQUES RECHERCHES (IPC) |
|  | G06F |

~~Le présent rapport a été établi pour toutes les revendications~~

| Lieu de la recherche | Date d'achèvement de la recherche | Examinateur |
|---|---|---|
| La Haye | 4 juillet 2008 | Post, Katharina |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**Numéro de la demande**

EP 08 15 7654

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1, 2, 3, 5

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION**
**FEUILLE SUPPLÉMENTAIRE B**

Numéro de la demande

EP 08 15 7654

La division de la recherche estime que la présente demande de brevet européen ne satisfait pas à l'exigence relative à l'unité d'invention et concerne plusieurs inventions ou pluralités d'inventions, à savoir :

1. revendications: 1,2

   dispositif de réduction modulaire mettant en oeuvre une multiplication de Montgomery à base de numération élevée avec l'algorithme cité

1.1. revendication: 3

   dispositif de réduction modulaire mettant en oeuvre une multiplication de Montgomery à base de numération élevée avec architecture pipelinée

1.2. revendication: 5

   composant cryptographique comportant un dispositif de réduction modulaire mettant en oeuvre une multiplication de Montgomery à base de numération élevée
   ---

2. revendication: 4

   dispositif de réduction modulaire mettant en oeuvre une multiplication de Montgomery à base de numération élevée comportant un séquenceur
   ---

Prière de noter que toutes les inventions mentionnées sous point 1, qui ne sont pas nécessairement liées par un concept inventif commun, ont pu être recherchées sans effort particulier justifiant une taxe additionnelle.

EPO FORM P0402

**ANNEXE AU RAPPORT DE RECHERCHE EUROPEENNE
RELATIF A LA DEMANDE DE BREVET EUROPEEN NO.**

EP 08 15 7654

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-07-2008

| Document brevet cité au rapport de recherche | Date de publication | Membre(s) de la famille de brevet(s) | Date de publication |
|---|---|---|---|
| WO 2006103288 A | 05-10-2006 | EP 1869545 A1<br>FR 2884005 A1<br>JP 2008535011 T | 26-12-2007<br>06-10-2006<br>28-08-2008 |

EPO FORM P0460

Pour tout renseignement concernant cette annexe : voir Journal Officiel de l'Office européen des brevets, No.12/82

EP 2 003 547 A1

**RÉFÉRENCES CITÉES DANS LA DESCRIPTION**

**Documents brevets cités dans la description**

- EP 0712071 A